Europäisches Patentamt

European Patent Office

Office européen des brevets

(11) Publication number: **0 285 727 B1**

# EUROPEAN PATENT SPECIFICATION

(45) Date of publication of patent specification: **26.02.92**     (51) Int. Cl.⁵: **H01M  8/12**, H01M 8/24, H01M 4/86

(21) Application number: **87310546.4**

(22) Date of filing: **30.11.87**

(54) **Self supporting electrodes for solid oxide fuel cells.**

(30) Priority: **06.04.87 US 34245**

(43) Date of publication of application:
**12.10.88 Bulletin  88/41**

(45) Publication of the grant of the patent:
**26.02.92 Bulletin  92/09**

(84) Designated Contracting States:
**BE DE FR GB IT NL SE**

(56) References cited:
**EP-A- 0 055 011
EP-A- 0 055 016
US-A- 3 228 798
US-A- 3 984 303
US-A- 4 476 196**

(73) Proprietor: **WESTINGHOUSE ELECTRIC COR-
PORATION
Westinghouse Building Gateway Center
Pittsburgh Pennsylvania 15222(US)**

(72) Inventor: **Reichner, Philip
120 Paree Drive
Pittsburgh, PA 15239(US)**

(74) Representative: **van Berlyn, Ronald Gilbert
23, Centre Heights
London, NW3 6JG(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

This invention relates to self supporting electrodes for solid oxide fuel cells. High temperature, solid oxide electrolyte fuel cell configurations, and fuel cell generators, are well known in the art, and are disclosed in U.S. Patent Specification Nos. 4,395,468 and 4,490,444 (Isenberg). These fuel cell configurations comprise a plurality of individual, series and parallel electronically connected, axially elongated, generally tubular, annular cells. Each cell is electronically connected in series to an adjacent cell in a column, through narrow cell interconnections extending the full axial length of each cell. This interconnection contacts the air electrode of one cell and the fuel electrode of an adjacent cell, through a metallic coating and a fiber metal felt.

Each fuel cell is formed on a long, electronically insulating, porous support tube, generally made of calcia stabilized zirconia, which provides structural integrity for the fuel cell. Surrounding, and deposited on this support tube, is a thin, porous air electrode, generally from 500 micrometres to 2000 micrometres thick, deposited by well known techniques. The air electrode can be comprised of doped or undoped oxides or mixtures of oxides in the perovskite family, such as $LaMnO_3$, $CaMnO_3$, $LaNiO_3$, $LaCoO_3$, $LaCrO_3$, and the like. Generally surrounding the outer periphery of the air electrode is a gas tight, solid electrolyte, usually of yttria stabilized zirconia. Substantially surrounding the solid electrolyte is an outer, porous, fuel electrode, usually of nickel-zirconia cermet. A single, open end, oxidant injector tube is used in each fuel cell, to flow gaseous oxidant into the cell. The oxidant contacts the support and diffuses through it to the air electrode.

Many improvements have been made to the support tube for the fuel cell. U.S. Patent Specification No. 4,596,750 (Ruka et al.), discloses a fluorite type support tube material which would be better able to resist cracking due to migration of lanthanum or manganese materials contained in the contacting air electrode, at fuel cell operating temperatures of about 1000°C. U.S. Patent Specification No. 4,598,028 (Rossing et al.), discloses lighter weight, thinner, higher strength support tubes, which utilized a ceramic powder and ceramic fiber combination, allowing reduction of the oxygen path length to the air electrode through the support. Improvements have also been made to the air electrode. For example, U.S. Patent Specification No. 4,562,124 (Ruka), discloses the introduction of small amounts of cerium into the air electrode material, to provide a better match of coefficient of thermal expansion with the support tube.

A problem with the air electrode, however, is that electronic current flow through the air electrode to the interconnection, which connected the next cell electronically in series, was confined to the circumferential path of the air electrode around the non-electronically conductive cell support tube, and the enclosed central oxidant chamber. This current path resulted in a circumferential voltage gradient, and did not provide for complete uniformity in cell current density. In addition, it has always been difficult to match the thermal expansion coefficients of the support and contacting air electrode, and to prevent some migration of air electrode material into the support at the 1000°C operating temperature of the cell in a fuel cell generator. What is needed is a new design for the fuel cell, eliminating the problems of circumferential current flow, thermal mismatch, and material migration, while still providing a strong support for the air electrode, electrolyte and fuel electrode.

Accordingly, the present invention resides in an axially elongated cell for a high temperature fuel cell arrangement according to Claim 1.

Further according to the invention are a plurality of cells according to Claim 1 characterized in that, for each cell, the inner self-supporting electrode is an air electrode, the outer electrode is a fuel electrode, the interconnect on one electrode structure is electronically connected to a fuel electrode of an adjacent electrode structure, fuel is fed to contact the fuel electrodes, and oxidant is fed to contact the air electrodes.

In its simplest embodiment, there is provided at least one electronically conductive interior partition, preferably the same composition as the rest of the electrode, with elimination of the separate support tube. Electrolyte and fuel electrode layers can be deposited over the air electrode to form annular cells which can be electronically connected in series and also in parallel to similar adjacent cells. The term "annular", is used to describe a variety of cross-sections, for example, circular or square cross-sections.

This elongated electrode configuration provides a plurality of interior chambers, and permits the conductive partition member to help electronically connect the interconnection to the farthest points on the electrode, helping to eliminate circumferential current flow and to reduce circumferential voltage gradients. The elimination of the separate support tube reduces overall cell costs, eliminates one deposition step in manufacturing, and eliminates thermal mismatch and material migration problems. An oxidant injector tube can be used in each of the inner oxidant chambers, or the chambers can be interconnected at one end to perform both supply and exhaust functions.

In order that the invention can be more clearly understood, convenient embodiments thereof will now be described, by way of example, with reference to the accompanying drawings in which:

Figure 1 is a schematic view in section, showing the separately supported, prior art fuel cell design;

Figure 2 is a schematic section view of a prior art series-parallel interconnection configuration;

Figure 3 is a section through two adjacent cells of this invention, showing one self supporting electrode design, and interconnection between cells;

Figure 4 is a section through the bottom of the cell of this invention utilizing a thick interior structural partition member;

Figure 5 is a section through an oval type of electrode design; and

Figure 6 is a section through a flat type of electrode design.

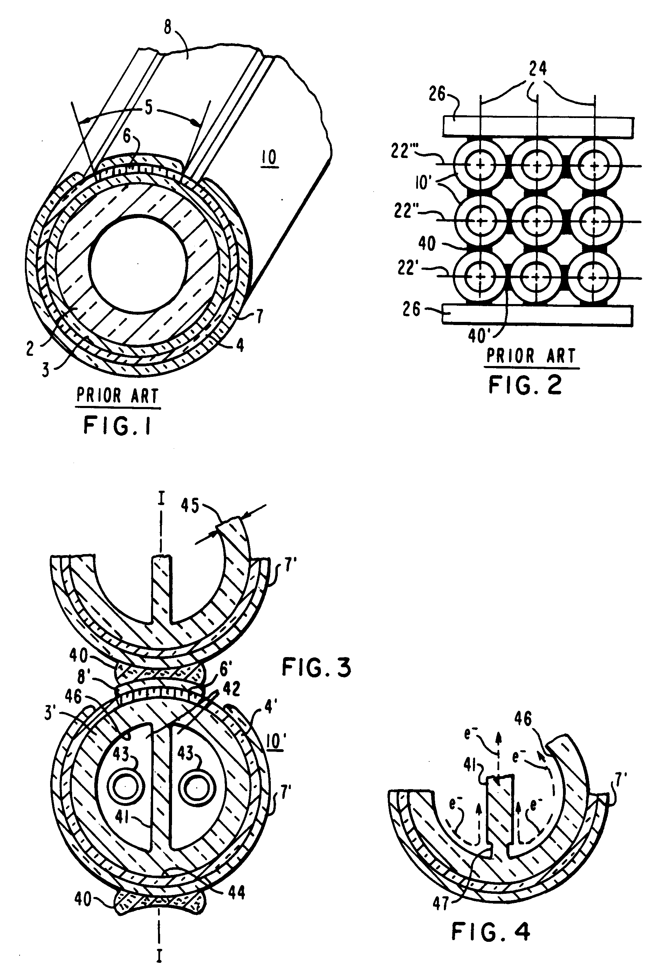

Referring now to Figure 1, the supported, prior art fuel cell 10, having a thick support tube 2, which provides structural integrity to the cell, is shown. The support tube was typically comprised of calcia stabilized zirconia, forming a wall porous to gas permeation, approximately 1 mm to 2 mm thick. Surrounding the outer periphery of the support tube 2 was a porous air electrode or cathode 3. The cathode 3 was typically a composite oxide structure which was deposited onto the support tube through well-known techniques such as plasma spraying, or spraying or dipping in a slurry followed by sintering. The thin electrolyte layer 4 is shown enlarged for clarity.

The prior art support tube is eliminated in the fuel cell design of this invention, one embodiment of which is shown in Figure 3, which utilizes a thicker air electrode or cathode 3', having one central partition rib dividing two interior chambers. This air electrode may be a chemically modified oxide or mixture of oxides including $LaMnO_3$, $CaMnO_3$, $LaNiO_3$, $LaCoO_3$ and $LaCrO_3$. A preferred material is $LaMnO_3$ doped with Sr. Over the electrode is a gas-tight solid electrolyte 4', typically yttria stabilized zirconia, from 1 micrometre to 100 micrometres thick. A selected, narrow, longitudinal segment 5, shown in Figure 1, along the electrode axial length, is masked during deposition of the electrolyte, to provide a discontinuity, into which, an interconnect material 6' is deposited. The narrow interconnect material 6' must be electrically conductive and chemically stable both in an oxygen and in a fuel environment.

The interconnect, which covers only a small middle portion of the air electrode cross section surface, is from 5 micrometres to 100 micrometres thick and is typically made of lanthanum chromite doped with calcium, strontium, or magnesium. Surrounding the remainder of the cell except for the narrow interconnect area is a fuel electrode 7' which functions as the anode. A typical anode is about 30 microns to 300 micrometres thick. A material 8', which is of the same composition as the anode, is also deposited over the interconnect 6'. This material is typically nickel zirconia or cobalt zirconia cermet and is from 50 micrometres to 100 micrometres thick.

In operation, as in the prior art, a gaseous fuel, such as hydrogen or carbon monoxide, is directed over the outside of the cell, and a source of oxygen passes through the inside of the cell. The oxygen source forms oxygen ions at the electrode-electrolyte interface, which ions migrate through the electrolyte material to the anode, while electrons are collected at the cathode, thus generating a flow of electrical current in an external load circuit. A number of cells can be connected in series by contact between the interconnect of one cell and the anode of another cell. A more complete description of the operation of this type of fuel cell interconnection system and fuel cell generator can be found in U.S. Patent Specification Nos. 4,490,444 and 4,395,468.

Figure 2 shows the prior art series electrical connection scheme as well as parallel connection between adjacent fuel cells that can be used in this invention. The cells 10' are here positioned in a series-parallel electrical connection. For descriptive purposes, the arrangement includes rows 22 and columns 24. The cells of any given row 22', 22'', 22''' are electrically interconnected in parallel through the outer electrodes and metal felts 40'. Use of the felt ensures a large contact surface and avoids potential structural damage to the outer electrodes. Consecutive cells 10 along a column 24 are electrically interconnected in series, as shown in Figure 3, from the inner electrode of one cell to the outer electrode of the next cell through metal felts 40. Thus, each cell in a row operates at substantially the same voltage, and cumulative voltage progressively increases along the cells of a column, typically varying by approximately one volt from cell-to-cell along a column. In this manner, any number of elongated cells can be interconnected to achieve a desired voltage and current output. Other configurations, in addition to the shown rectangular array, are equally possible.

The electrical power generated by the series-parallel interconnection is readily collected by two plates 26, one in electrical contact with each cell of a row 22' at one extremity of the stack, and another in electrical contact with each cell of the row at the other extremity.

Referring again to Figure 3, one axially elongated annular cell of this invention is shown with the electronically conducting air electrode 3', with electronically conducting partition member 41, and without the thick, tubular support 2, shown in Figure 1. This member 41 is central to the electrode and divides the oxidant chamber into two sections 42. The interior, diametrical structural member 41 allows electronic connection of the interconnection 6' to the furthest point 44 on the air electrode, and current flow from bottom to top along line I-I of Figure 3. The rib partition can also contain two or more crossing members.

For the single diametrical partition design shown, two oxidant injector tubes 43 can be used to supply oxidant to the inner surface of the air electrode. If four crossing members are used from a point central to the fuel cell, then four oxidant injector tubes can be used, one in each divided oxidant chamber. The use of at least one electronically conducting structural member connecting at least two places on the inner circumferential wall 46 of the annular air electrode, provides a self-supporting structure, and a low resistance current path from point 44 to the interconnection 6', reducing the circumferential voltage gradient for a given cell diameter.

The self supporting air electrode can be extruded, or it can be molded in a suitable die. After it is formed, it can be sintered at from $1300\degree$ C to $1600\degree$ C, to provide a strong, unitary body upon which superimposed electrolyte and then fuel electrode can be deposited by well known techniques. Preferably, both the central structural member(s) connecting the inner walls of the air electrode and the surrounding air electrode wall portion will be of the same material. It is possible, however, to co-extrude or insert a more highly conductive structural partition into the air electrode design, for example by elimination of pore-former in that region, or by subsequent impregnation with additional material.

The use of a structural partition 41, dividing the oxidant chamber into a plurality of sections 42, allows a relatively thin air outer electrode wall 45 of from 100 micrometres to 2000 micrometres (2 mm). The electronically conductive member 41 will generally be from 500 micrometres to 5000 micrometres thick. These thicknesses are not to be considered limiting in any way and will depend largely on the diameter of the fuel cell tube.

Preferably, the structural member 41 will be as thick as possible without seriously hindering oxidant feed, so that good electronic flow is achieved. If a thick interior member 41 is used, as shown in Figure 4, preferably, a thinner cut-in section 47 opposite or away from the interconnection will help oxidant diffusion, hinder electron flow, shown as $e^-$ arrows within the electrode, for only a short length and not significantly harm strength.

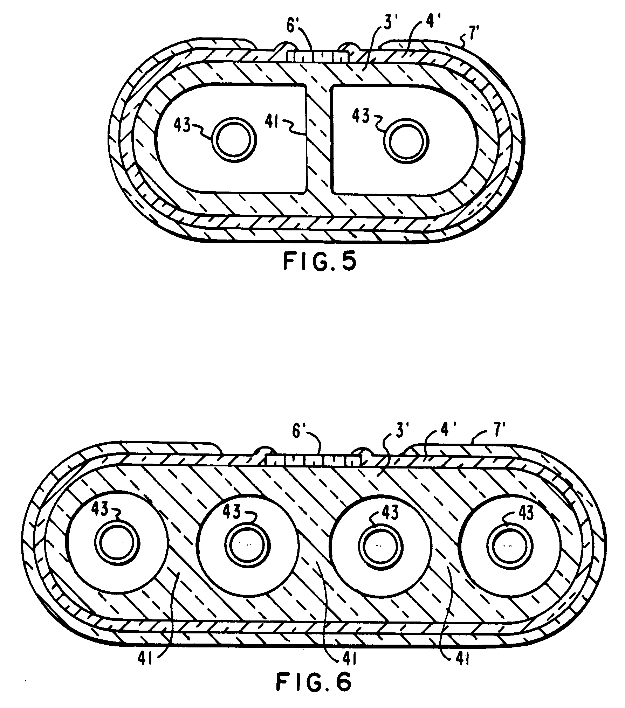

Additional embodiments of the cell of this invention are shown in Figures 5 and 6. In Figure 5, an oval type design is shown, and in Figure 6 a flat type design is shown. The electrode of Figure 5 is a somewhat flattened version of the electrode of Figures 3 and 4. Where the member 41 is still seen as connecting opposite interior walls of the electrode. In the more flattened out version of Figure 6, circular chambers are shown, and the member 41 becomes less identifiable as a connecting member to interior walls, but it is still thick and has the ability to channel electrons from the far sides to the narrow interconnection 6' which is deposited on the center 10% to 30% of the top air electrode structure.

## Claims

1. An axially elongated annular cell for a high temperature fuel cell arrangement and which comprises inner and outer porous electrodes with a solid oxide electrolyte layer therebetween, said outer electrode and said electrolyte layer defining a gap receiving an electrically conductive interconnect deposited on said inner electrode to extend an axial length along the latter but spaced from said outer electrode sufficiently to avoid direct electrical communication therewith, characterized in that said inner electrode is self-supporting and comprises a metal oxide material defining at least two separate chambers through its axial length and permitting electrons at points in said inner electrode furthest from said interconnect to travel to the latter through said metal oxide material separating the chambers.

2. A cell according to claim 1, characterized in that the inner electrode is thicker than the outer electrode.

3. A cell according to claim 1 or 2, characterized in that the metal oxide material separating two chambers is in the form of a single structural member.

4. A cell according to claim 1, 2 or 3, characterized in that the inner electrode is composed of at least one of $LaMnO_3$, $CaMnO_3$, $LaNiO_3$, $LaCoO_3$ and $LaCrO_3$.

5. A cell according to claim 4 characterized in that the $LaMnO_3$ is doped with strontium.

6. A cell according to any of claims 1 to 5, characterized in that the electrolyte layer is composed of yttria stabilized zirconia and the outer electrode is composed of nickel zirconia cermet or cobalt zirconia cermet.

7. A high temperature solid oxide electrolyte fuel cell arrangement comprising a plurality of axially elongated annular cells as claimed in any of claims 1 to 5 characterised in that the interconnect on one annular cell is electronically connected to an outer electrode of an adjacent annular cell and in that each inner electrode is an air electrode arranged to be contacted by oxidant and each outer electrode is a fuel electrode arranged to be contacted by fuel.

8. An arrangement according to claim 7, characterized in that each of the separate chambers of the air electrode has an oxidant injector tube disposed therein.

## Revendications

1. Pile annulaire de forme axialement allongée qui est destinée à un agencement de piles à combustible fonctionnant à haute température et qui comprend des électrodes poreuses intérieure et extérieure avec, entre elles, une couche d'électrolyte solide à base d'oxyde, ladite électrode extérieure et ladite couche d'électrolyte délimitant un intervalle recevant une interconnexion électro-conductrice déposée sur ladite électrode intérieure de manière à s'étendre sur la longueur axiale de cette dernière mais en étant espacée de ladite électrode extérieure suffisamment pour éviter une communication électrique directe avec cette dernière, caractérisée en ce que ladite électrode intérieure est auto-supportante et comprend une matière à base d'oxyde métallique définissant au moins deux chambres séparées d'un bout à l'autre de sa longueur axiale et permettant aux électrons se trouvant aux points de ladite électrode intérieure les plus éloignés de ladite interconnexion de se déplacer jusqu'à cette dernière à travers la matière à base d'oxyde métallique séparant les chambres.

2. Pile selon la revendication 1, caractérisée en ce que l'électrode intérieure est plus épaisse que l'électrode extérieure.

3. Pile selon les revendications 1 ou 2, caractérisée en ce que la matière à base d'oxyde métallique séparant les deux chambres se présente sous la forme d'un seul élément structural.

4. Pile selon les revendications 1, 2 ou 3, caractérisée en ce que l'électrode intérieure est composée d'au moins un des produits parmi $LaMnO_3$, $CaMnO_3$, $LaNiO_3$, $LaCoO_3$ et $LaCrO_3$.

5. Pile selon la revendication 4, caractérisée en ce que $LaMnO_3$ est dopé avec du strontium.

6. Pile selon l'une quelconque des revendications 1 à 5, caractérisée en ce que la couche d'électrolyte est composée de zircone stabilisé par de l'oxyde d'yttrium et que l'électrode extérieure est composée de cermet à base de zircone-nickel ou de cermet à base de zircone-cobalt.

7. Agencement de piles à combustible fonctionnant à haute température et à électrolyte à base d'oxyde solide, comprenant une pluralité de piles annulaires de forme axialement allongée telles que revendiquées dans l'une quelconque des revendications 1 à 5, caractérisé en ce que l'interconnexion présente sur une des piles annulaires est reliée électroniquement à une électrode extérieure d'une pile annulaire adjacente et en ce que chaque électrode intérieure est une électrode à air disposée de manière à être contactée par un oxydant et chaque électrode extérieure est une électrode à combustible disposée de manière à être contactée par un combustible.

8. Agencement selon la revendication 7, caractérisé en ce que chacune des chambres séparées de l'électrode à air comporte un tube injecteur d'oxydant qui y est disposé.

## Patentansprüche

1. Eine axial langgestreckte ringförmige Zelle, die für eine Hochtemperaturbrennstoffzellenanordnung vorgesehen ist und innere und äußere poröse Elektroden mit einer dazwischen angeordneten Festoxidelektrolytschicht aufweist, wobei äußere Elektrode und die Elektrolytschicht einen Spalt bilden, der eine elektrisch leitende Zwischenverbindung aufnimmt, die auf der inneren Elektrode aufgebracht ist, um sich über eine axiale Längserstreckung entlang der inneren Elektrode zu erstrecken, jedoch von der äußeren Elektrode einen ausreichenden Abstand aufweist, um eine direkte elektrische Verbindung damit zu vermeiden, dadurch gekennzeichnet, daß die innere Elektrode selbsttragend ist und ein Metalloxidmaterial umfaßt, das zumindest zwei separate Kammern durch seine axiale Längserstreckung hindurch bildet und Elektronen ermöglicht, an Punkten innerhalb der inneren Elektrode, die von der Zwischenverbindung am weitesten entfernt sind, durch das die Kammern trennende Metalloxidmaterial hindurch zu der Zwischenverbindung zu wandern.

2. Eine Zelle nach Anspruch 1, dadurch gekennzeichnet, daß die innere Elektrode dicker ist als die äußere Elektrode.

3. Eine Zelle nach Anspruch 1 oder 2, dadurch gekennzeichnet, daß das Metalloxidmaterial, das zwei Kammern trennt, in der Form eines einzigen strukturellen Gliedes vorliegt.

4. Eine Zelle nach Anspruch 1, 2 oder 3, dadurch gekennzeichnet, daß die innere Elektrode zusammengesetzt ist aus zumindest einem der folgenden Bestandteile: $LaMnO_3$, $CaMnO_3$, $LaNiO_3$, $LaCoO_3$ und $LaCrO_3$.

5. Eine Zelle nach Anspruch 4, dadurch gekennzeichnet, daß das $LaMnO_3$ mit Strontium dotiert ist.

6. Eine Zelle nach einem der Ansprüche 1 bis 5, dadurch gekennzeichnet, daß die Elektrolytschicht zusammengesetzt ist aus mit Yttria stabilisiertem Zirkonia, und daß die äußere Elektrode zusammengesetzt ist aus Nickel-Zikonia-Cermet oder Kobalt-Zikonia-Cermet.

7. Eine Hochtemperaturfestoxidelektrolytbrennstoffzellenanordnung, bestehend aus einer Mehrzahl von axial langgestreckten ringförmigen Zellen nach einem der Ansprüche 1 bis 5, dadurch gekennzeichnet, daß die Zwischenverbindung auf einer ringförmigen Zelle elektronisch verbunden ist mit einer äußeren Elektrode einer angrenzenden ringförmigen Zelle, und daß jede innere Elektrode eine Luftelektrode ist, die so angeordnet ist, daß sie von Oxidationsmittel berührt wird, und daß jede äußere Elektrode eine Brennstoffelektrode ist, die so angeordnet ist, daß sie von Brennstoff berührt wird.

8. Eine Anordnung nach Anspruch 7, dadurch gekennzeichnet, daß jede der separaten Kammern der Luftelektrode ein in ihr angeordnetes Oxidationsmittelinjektorrohr aufweist.

PRIOR ART
FIG. 1

PRIOR ART
FIG. 2

FIG. 3

FIG. 4

7

FIG. 5

FIG. 6